# EUROPEAN PATENT SPECIFICATION

(11) **EP 1 301 573 B1**
(45) Date of publication and mention of the grant of the patent: **14.09.2005**
(21) Application number: 01949684.3
(22) Date of filing: 17.07.2001
(51) Int. Cl.: C09D 7/12

(54) **LACQUER COATINGS**
LACKBESCHICHTUNGEN
REVETEMENTS DE VERNIS LAQUE

(30) Priority: 18.07.2000 GB 0017466
(43) Date of publication of application: 16.04.2003
(73) Proprietor: ORB ELECTRICAL STEELS LIMITED, Newport, Gwent NP9 0XT (GB); Valspar (UK) Corporation Ltd, Oxford OX8 6XZ (GB)
(72) Inventor: SNELL, David, Gwent NP3 2PD (GB); DARGE, Reginald,c/o Valspar (UK) Corporation Ltd, Oxford OX8 6XZ (GB)
(74) Representative: Fry, Alan Valentine
(86) International application number: PCT/GB2001/003142
(87) International publication number: WO 2002/006408

(56) References cited:
- EP-A- 0 651 601
- WO-A-98/24557
- DE-A- 4 424 101

## Description

This invention relates to coatings for electrical steel strip and more especially, but not exclusively, to coatings of annealable and non-annealable UV curable lacquers for non-oriented electrical steel strip.

It is known to coat non-oriented electrical steel strip on one or both surfaces with an insulation lacquer in order to improve the performance of the strip when employed, for example, in a magnetic core of an electrical machine. Insulation coatings on electrical steel laminations reduce the eddy current losses in a stack of such laminations and hence reduce power losses in the steel.

Certain applications for steel require coatings which are essentially organic in nature and these exhibit good punchability characteristics but only reasonable welding characteristics. Conversely, other coatings comprise inorganic additives and exhibit excellent welding characteristics but behave poorly when punched. Therefore the coating chosen has to be a compromise to suit the final application and customer requirements. Adhesion, insulation resistance and heat resistance are other important coating requirements.

It is extremely difficult with conventional electric steel coatings to produce on the strip very thin coating of uniform thickness because of the rheology of the applied coating.

Co-pending International Application WO 98/24557 is directed to apparatus for applying a coating of an insulation layer to a moving surface of a strip which comprises a rotatable roller whose surface defines a multiplicity of cells and a reservoir containing a bath of heated organic, inorganic/organic or UV curable acrylic or cationic lacquer in which a part of the roller surface is immersed when rotating. Insulating lacquer enters the cells of the roller surface and excess lacquer is wiped from the roller surface. A rotatable applicator roll having a substantially plain surface free of grooves or other indentations is rotated with the surface in contact with the surface of the lacquer carrying roller whereby lacquer present in the cells of the roller is transferred to the surface of the applicator roll. The surface to be coated is moved continuously past and in contact with the roll surface to apply a uniform coating of lacquer to that surface. The strip is preferably a strip of non-oriented electrical steel.

The use of UV curable lacquers is well established in the printing industry but because of the stringent requirements for coatings on electrical steel such coatings have not been used in the electrical steels industry.

Lacquers which typically comprise *inter alia* monomers, acrylate esters, prepolymers, photoinitiators, adhesion promoters, wetting agents, (any such laquer being referred to below as a standard lacquer) are known. Combinations of these additives together with the additions of talc and phosphates have result in the development by the Applicants of a lacquer which bonds well to electrical steel strip and exhibits other good properties. The lacquer has, however, been found to not be totally satisfactory when magnetic cores produced from laminations of the coated strip are subject to annealing at temperatures of around 800°C. This is because of a tendency for the coated steel laminations to stick together at such temperatures.

For good performance the lacquer must resist the anneal without resulting in the laminations adhering together. This requires that the lacquer leaves a bonded residue on the steel surface after the anneal.

This invention sets out to provide for electrical steel strip annealable UV curable lacquers which do not suffer from the disadvantages discussed above.

According to the present invention in one aspect, there is provided a UV curable lacquer which comprises a standard lacquer (as hereinbefore defined) to which has been added a filler comprising talc and/or zinc phosphate and magnesium borate, the filler being present in a quantity not greater than 30% by weight. Individual additions of talc, zinc phosphate and magnesium borate are typically between 2 and 28% by weight.

The filler may be present in a quantity of less than 25% by weight. In one embodiment, the maximum filler content is 20% by weight; in another embodiment the maximum filler content is 15% by weight. In a preferred embodiment the filler content is 9% by weight.

The Applicants have established that a minimum filler content of 3% is necessary to prevent sticking of the laminations during annealing. With filler contents in excess of 30% scuffing of the final coating generally occurs making the lacquer unsuitable for commercial application.

Various other compositions have been prepared and evaluated for response to annealing and it has been established that reducing the filler content to below 30% by weight reduced the scuffing problem to acceptable limits.

We have established that when the filler content is around 10% by weight no scuffing was apparent. A preferred lacquer therefore includes around 5% talc, 2% zinc phosphate and 2% magnesium borate (5,2,2) in addition to the standard resin composition.

For filler contents of between 12% and 19% by weight, lacquers in accordance with the invention may include around
10% talc, 2% zinc phosphate and 2% magnesium borate (10,2,2);
7% talc, 2% zinc phosphate and 10% magnesium borate (7,2,1.0);
5% talc, 2% zinc-phosphate and 2% magnesium borate (5,2,2);
5% talc, 2% zinc phosphate and 5% magnesium borate (5,2,5); and
5% talc, 4% zinc phosphate and 5% magnesium borate (5,4,5).

These are merely typical compositions of lacquers in accordance with the invention.

The lacquer may be acrylic or cationic based.

These lacquers have very high viscosity, typically 350 poise, and need to be heated to reduce the viscosity sufficiently to enable application to the steel strip to be commercially feasible, as indicated in our co-pending International Application WO 98/24557.

Trials have been conducted by the Applicants on lacquers in accordance with the invention and these trials will now be described.

Results taken from the trials are set out in Tables 1 to 7 below.

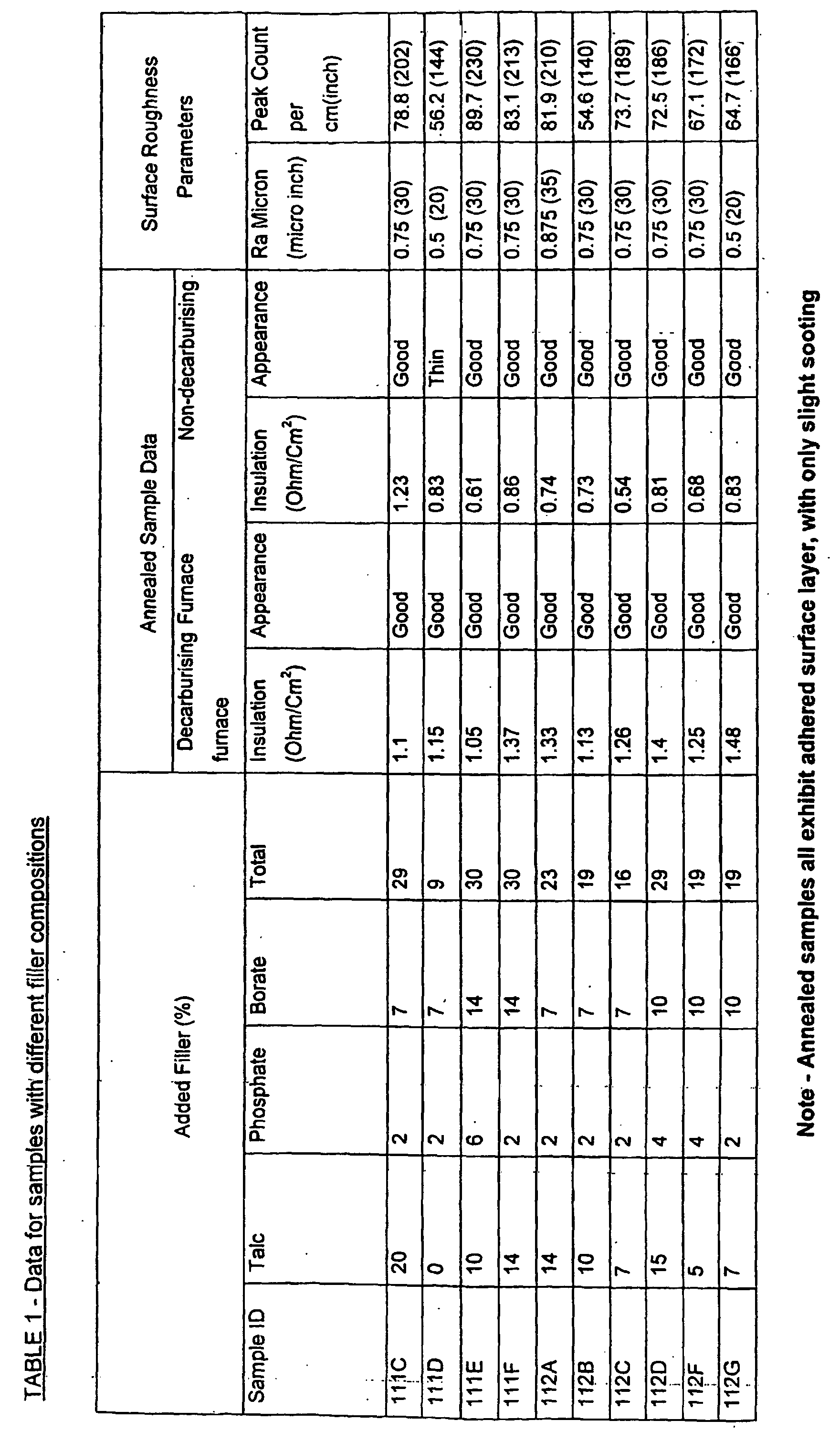

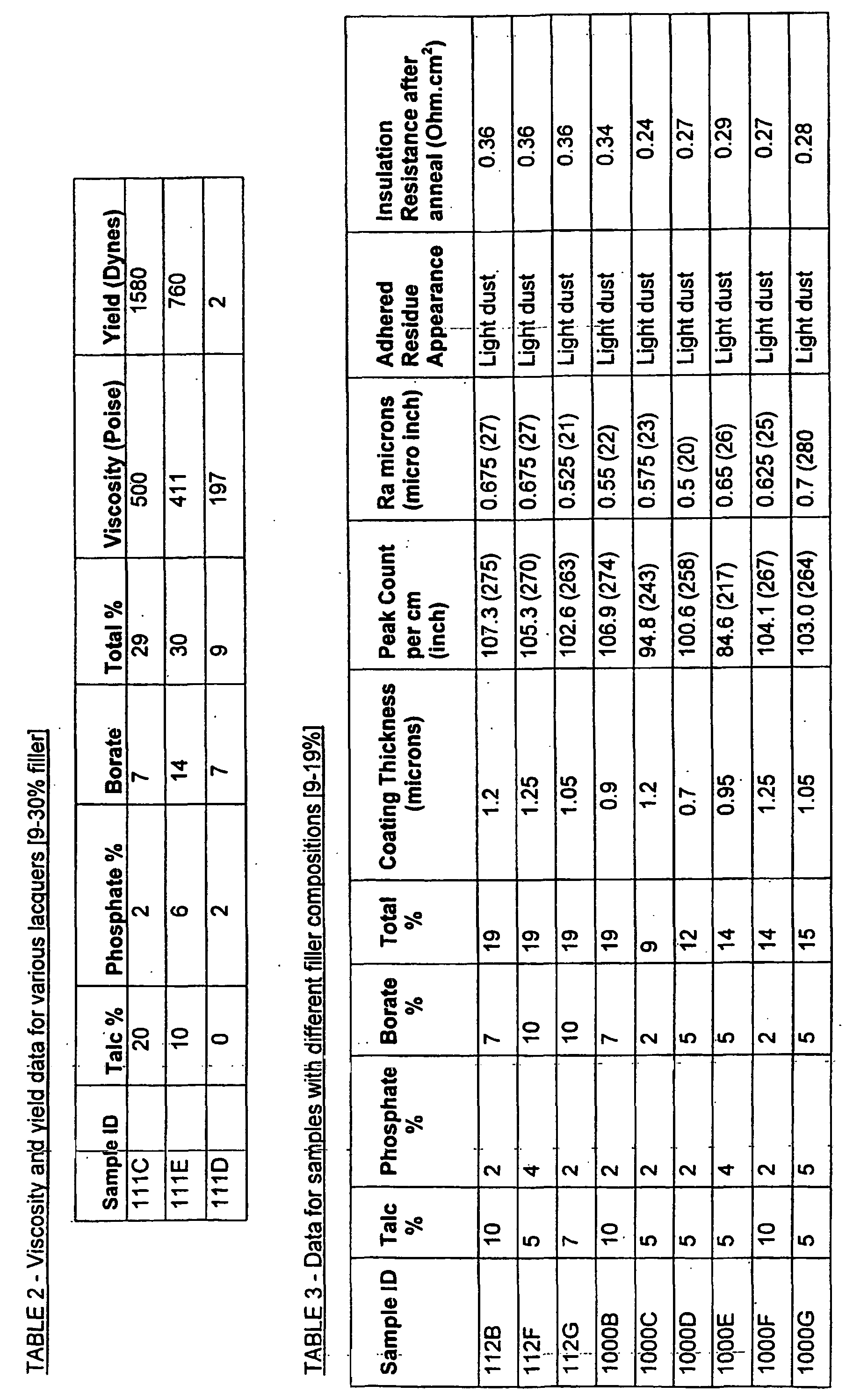

**TABLE 4 -**

| Composition of Annealable Lacquers | | | |
|---|---|---|---|
| **Reference** | **% Talc** | **% Zinc Phosphate** | **% Magnesium Borate** |
| 141A(112B) | 10 | 2 | 7 |
| 141B | 5 | 4 | 10 |
| 141C | 5 | 2 | 2 |
| 141D | 5 | 4 | 5 |

**TABLE 5 -**

| Chemical resistance of annealable lacquers | | | | | | | | |
|---|---|---|---|---|---|---|---|---|
| **Sample** | **Acetone** | **Water** | **Carbon Tetra- chloride** | **Trans. Oil** | **I.M.S** | **White Spirit** | **Freon** | **Chloroform** |
| 141A/45 | C | N | N | N | N | N | N | C |
| 141B/45 | S | N | N | N | N | N | N | C |
| 141C/40 | VS | N | N | N | N | N | N | C |
| 141D/35 | C | N | VS | N | N | N | N | C |
| 141C/45 | S | N | N | N | N | N | N | C |
| Note: C - completely removed S - slight removal VS - very slightly removed N - no removal | | | | | | | | |

**TABLE 6 -**

| Mean insulation resistance data | | | |
|---|---|---|---|
| **Reference** | **Resistance (Non-annealed) (Ohm.cm**^{**2**}**)** | **Resistance (Annealed) (Ohm.cm**^{**2**}**)** | **Coating Thickness (microns)** |
| 141A/45 | 3.23 | 0.30 | 0.90 |
| 141B/45 | 2.37 | 0.29 | 1.00 |
| 141C/35 | 3.68 | 0.31 | 1.30 |
| 141C/40 | 4.54 | 0.27 | 1.35 |
| 141C/45 | 2.78 | 0.33 | 1.27 |
| 141D/45 | 2.94 | 0.30 | 0.90 |

**TABLE 7 -**

| Mean surface roughness data | | | | | | | |
|---|---|---|---|---|---|---|---|
| Sample | Longitudinal Ra microns (micro inch) | Longitudinal Peak Count per cm | Transverse Ra Microns (micro inch) | Transverse Peak Count per cm (per inch) | Coating Thickness (microns) | Total Filler % | Coating System |
| 141A/65 | 0.569 (22.75) | 126.9 (325.5) | 0.588 (23.5) | 135.2 (341.5) | 0.90 | 19 | Pilot Line Coater |
| 141B/45 | 0.544(21.75) | 111.0 (284.5) | 0.544 (21.75) | 128.3 (329) | 1.00 | 19 | |
| 141C/45 | 0.531 (21.25) | 114.2 (292.8) | 0.531 (21.25) | 128.5 (329.5) | 1.27 | 9 | |
| 141D/45 | 0.531 (21.25) | 107.1 (274.5) | 0.525 (21) | 126.1(323.3) | 1.00 | 14 | |
| Original | 0.493 (19.7) | 155.2 (398.0) | 0.508 (20.3) | 196.4(503.7) | 1.5 | - | |
| Type A (30% filler) | 0.393 (15.7) | 156.1 (400.3) | 0.408 (16.3) | 170 (436.0) | | | |
| Original | 0.568 (22.7) | 61:1 (156.7) | 0.718 (28.7) | 77.6 (199.0) | 1.50 | - | |
| Type N | 0.675 (27.0) | 71.0 (182.0) | 0.458 (18.3) | 97.4 (249.7) | | | |
| 141A | 0.725 (29) | 105.6 (270.7) | 0.743 (29.7) | 109.9(281.7) | 1.30 | 19 | Lab-Coater |
| 141 B | 0.668 (26.7) | 90.8 (232.7) | 0.658 (26.3) | 92.4 (237) | 1.45 | 19 | |
| 141C | 0.608 (24.3) | 89.2 (228.7) | 0.758 (30.3) | 98.3 (252) | 1.75 | 9 | |
| 141D | 0.275 (31) | 86.7 (222.3) | 0.833 (33.3) | 91.8 (235.3) | 1.80 | 14 | |
| 112B 141A | 0.700(28) | 111.4 (285.7) | 0.843 (33.7) | 109.7(281.3) | 1.65 | 19 | |

In one particular trial, strip samples were coated using various compositions of annealable lacquers. The samples were coated on both sides using a suitable laboratory coating unit. The coating thickness of the samples was typically 1.0-1.6µ. Samples covering the full range of compositions were annealed in a non-decarburising or a decarburising furnace.

The compositions of the lacquers in terms of added filler are given in Table 1. The range of filler content was varied between 9 and 30% enabling the effect of the fillers on adhesion, surface roughness, lacquer viscosity, scuff resistance and insulation resistance before and after anneal at 800°C to be established.

As indicated in Table 1 the general appearance of all annealed samples was good.

A black adhered residue remained on the sample surface after anneal in all cases with only slight sooting on the surface.

Infra-red analysis of the annealed samples showed that the non-decarburising anneal produced a different surface layer to that produced when the decarburising annealing furnace was employed for similar samples. The decarburising anneal was typical of commercial processing of the coated product.

Overall, a filler content of 16-23% gave similar results to samples with filler contents of around 30%, in relation to insulation resistance and adhesion after anneal.

Insulation resistance values after anneal were very good, even for the samples with only 9-16% filler. This indicates that it is possible to produce lacquers with lower filler contents while still retaining reasonable values of insulation resistance and good adhesion after anneal.

Surface roughness parameter data given in Table 1 show that the peak count values for the laboratory produced samples were in the range 54.6 - 89.7 per cm(140-230/inch), some of which were lower than the typical 78 per cm (200 per inch) value obtained for normal non-annenalable lacquers which were particularly scuff resistant. Values of 156 cm (400/inch) were typically achieved when using a pilot/production line system.

Table 2 shows the data determined in relation to viscosity and yield of some of the sample lacquers. It is considered that viscosities greater than 100 Poise and yield values of less than 1000 dynes are desirable, for ease of commercial manufacture of the lacquer. On the basis of the results obtained, use of a lower viscosity lacquer exhibiting the desired properties is feasible.

In other trials, further batches of the lacquers were produced and coated samples were generated using a conventional laboratory coating unit. These samples are listed in Table 3. For this batch of samples, coating thickness values ranged from 0.7 to 1.25µ. The composition of the lacquers in terms of added filler are set out in Table 3.

The coated samples were annealed in a decarburising furnace and the insulation resistance of the annealed samples was measured using a Franklin tester. Surface roughness values (Ra and Peak count) were obtained for the samples in the non-annealed condition and a general assessment of the appearance of the annealed surfaces was made on the basis of visual observation.

The results of the measurements made are given in Table 3 for total lacquer filler content varying between 9 and 19%. The aim of this investigation was to further establish the effect of a reduced level of fillers on the insulation resistance, surface roughness, scuff resistance and annealability characteristics of the coating.

After annealing of the coated samples listed in Table 3, a black residue was formed on the surface of the samples with only a small amount of light dust remaining, this being observed following rubbing the strip with a tissue. The results for the lower filler content non-annealed samples overall appeared to be slightly better than for the higher filler content samples in terms of scuff resistance.

The surface roughness of the samples as indicated by the Peak count (Pc) value ranged from 84.6-107.3 per cm (217-275/inch), much lower than the 156 per cm (400/inch level) which gives rise to scuffing problems when coating is produced on a pilot line.

Insulation resistance data after anneal of the sample is also given in Table 3, and it can be seen that insulation resistance values after anneal ranged from 0.24-0.36 ohm.cm². These values are considered satisfactory for many semi-processed electrical steel applications. Higher values would, however, be preferred. The results obtained for the low filler content formulations of this evaluation (9-19%) were therefore considered to be satisfactory.

Various samples of annealable lacquers showing most promise from the investigations discussed above were then obtained to enable pilot line trials to be carried out. The filler content of the lacquers is shown in Table 4. Sections of a 1 tonne coil were coated on a pilot line using an anilox coating system described in our co-pending International Application WO 98/24557.

Coated samples were produced using M420-50 D grade steel strip, 0.5mm in thickness, over a range of coating temperatures (35°C-45°C).

Samples from each section of coated strip were cut into suitable size specimens for evaluation of the following properties: coating thickness, insulation resistance before and after anneal at 800°C, chemical resistance, surface roughness, appearance after anneal, annealability and scuff resistance.

As for the previous trials, coated samples of the formulations were annealed in a decarburising furnace.

Scuff resistance of the coatings was assessed by simply scratching the surface, and by observation of the appearance of the sheets following scuffing between other sheets of similarly coated material. From this, it was apparent that this batch of coatings, containing <20% filler, was greatly improved in terms of scuff resistance over coatings containing around 30% filler. In particular, samples 141B and 141C were considered the best, samples 141A and 141D being slightly more prone to scuffing.

Resistance of the samples to chemical attack was assessed and the results are given in Table 5 for samples coated at a range of temperatures. It can be seen that in essentially all cases, the chemical resistance of the coatings was very good, and is considered to be quite acceptable for this batch of coatings, particularly with respect to Freon and transformer oil.

The general appearance of all the samples after anneal was very good, a thin black adhered residue remaining on the surface after anneal in all cases. All coatings exhibited anti-stick characteristics, following anneal at 800°C.

The insulation resistance of numerous samples produced was measured before and after anneal (different samples) and the results of the measurement are given in Table 6.

As will be seen from Table 6, insulation resistance values of the reduced filler samples before anneal were typically 2.37-4.54 ohm.cm² per lamination. The coating thickness of these samples was ~0.9-1.35µ. In general, higher values of coating thickness tend to result in higher values of insulation resistance before anneal. The insulation resistance after anneal appeared to be independent of coating thickness at the level applied, and is no doubt dependent on the percentage of inorganic fillers added to the resin. Coating temperature had little effect on final insulation resistance properties for the range considered (35°C-45°C).

A minimum surface insulation resistance value of 5 ohm.cm² per lamination is required for coated steel for fully processed applications. Slightly thicker UV coatings may be required to satisfy the insulation requirement for such applications. Only a thin anti-stick coating is required for semi-processed applications where insulation resistance is not a major concern.

Samples with filler contents around 30% tended to give slightly higher insulation resistance values for a similar coating thickness. Insulation resistance has therefore reduced slightly with a reduction of filler content aimed at improvement of scuff resistance. A compromise is therefore necessary between achieving adequate scuff resistance and desired insulation resistance properties.

It was found that when the filler content was reduced to <30% longitudinal Peak count values of approximately 117 per cm (300/inch) were generated. The original annealable lacquer, which did not exhibit very good scuff resistance, exhibited Peak count values of ~156 per cm (400/inch) (Table 7).

The use of a laboratory coater results in lower Peak count values when using a pilot production line system.

The foregoing demonstrates that reducing the filler content to only 9% does not appear to have a significant detrimental effect on insulation resistance, chemical resistance or annealability. Scuff resistance was, however, greatly improved by use of low filler content lacquers. Lacquers containing only 10-15% filler are much easier to prepare commercially and easier to apply and handle on a production line than higher filler content lacquers, hence it is highly desirable to use lacquers with minimum filler content commercially.

Overall, insulation resistance values were acceptable for a thin coating for semi-processed applications. The use of slightly thicker coatings than normal may be necessary for fully processed applications.

Advantages of lacquers in accordance with the invention include the following: the coated steel has excellent chemical resistance; the coating can be applied very thinly when using the apparatus disclosed in WO 98/24557; the coated strip has excellent punchability and welding characteristics; and the lacquers are odourless.

## Claims

1. A UV curable lacquer which comprises a standard lacquer to which has been added a filler comprising talc and/or zinc phosphate and magnesium borate, the filler being present in the lacquer in a quantity between 3% and 30% by weight.

2. A lacquer as claimed in claim 1 in which the added filler comprises talc, zinc phosphate and magnesium borate.

3. A lacquer as claimed in claim 1 wherein the filler is present in a quantity of between 3% and 25% by weight.

4. A lacquer as claimed in claim 2 wherein the filler is present in a quantity not exceeding 20% by weight.

5. A lacquer as claimed in claim 2 wherein the filler is present in a quantity not exceeding 15% by weight.

6. A lacquer as claimed in claim 2 wherein the filler is present in a quantity not exceeding 9% by weight.

7. A lacquer as claimed in any one of the preceding claims in which the filler includes 10% talc, 2% zinc phosphate and 2% magnesium borate by weight.

8. A lacquer as claimed in any one of the preceding claims in which the filler includes 7% talc, 2% zinc phosphate and 10% magnesium borate by weight.

9. A lacquer as claimed in any one of the preceding claims in which the filler includes 5% talc, 2% zinc phosphate and 2% magnesium borate by weight.

10. A lacquer as claimed in any one of the preceding claims in which the filler includes 5% talc, 2% zinc phosphate and 5% magnesium borate by weight.

11. A lacquer as claimed in any one of the preceding claims in which the filler includes 5% talc, 4% zinc phosphate and 5% magnesium borate by weight.

## Patentansprüche

1. Durch UV-Strahlung härtbarer Lack, der aus einem Standardlack besteht, dem ein Füllstoff zugesetzt wurde, der aus Talkum und/oder Zinkphosphat und Magnesiumborat besteht, wobei der Füllstoff im Lack in einer Menge zwischen 3 Gew.-% und 30 Gew.-% vorhanden ist.

2. Lack nach Anspruch 1, bei dem der zugesetzte Füllstoff Talkum, Zinkphosphat und Magnesiumborat umfasst.

3. Lack nach Anspruch 1, bei welchem der Füllstoff in einer Menge zwischen 3 Gew.-% und 25 Gew.-% vorhanden ist.

4. Lack nach Anspruch 2, bei welchem der Füllstoff in einer Menge enthalten ist, die 20 Gew.-% nicht überschreitet.

5. Lack nach Anspruch 2, bei welchem der Füllstoff in einer Menge enthalten ist, die 15 Gew.-% nicht überschreitet.

6. Lack nach Anspruch 2, bei welchem der Füllstoff in einer Menge vorhanden ist, die 9 Gew.-% nicht überschreitet.

7. Lack nach einem der vorhergehenden Ansprüche, bei welchem der Füllstoff 10 Gew.-% Talkum, 2 Gew.-% Zinkphosphat und 2 Gew.-% Magnesiumborat enthält.

8. Lack nach einem der vorhergehenden Ansprüche, bei welchem der Füllstoff 7 Gew.-% Talkum, 2 Gew.-% Zinkphosphat und 10 Gew.-% Magnesiumborat enthält.

9. Lack nach einem der vorhergehenden Ansprüche, bei welchem der Füllstoff 5 Gew.-% Talkum, 2 Gew.-% Zinkphosphat und 2 Gew.-% Magnesiumborat enthält.

10. Lack nach einem der vorhergehenden Ansprüche, bei welchem der Füllstoff 5 Gew.-% Talkum, 2 Gew.-% Zinkphosphat und 5 Gew.-% Magnesiumborat enthält.

11. Lack nach einem der vorhergehenden Ansprüche, bei welchem der Füllstoff 5 Gew.-% Talkum, 4 Gew.-% Zinkphosphat und 5 Gew.-% Magnesiumborat enthält.

## Revendications

1. Vernis laqué durcissable par UV qui comprend un vernis laqué habituel auquel on a ajouté une charge comprenant du talc et/ou du phosphate de zinc et borate de magnésium, la charge étant présente dans le vernis laqué en une quantité entre 3% et 30% en poids.

2. Vernis laqué selon la revendication 1 dans lequel la charge ajoutée comprend du talc, phosphate de zinc et borate de magnésium.

3. Vernis laqué selon la revendication 1 dans lequel la charge est présente en une quantité entre 3% et 25% en poids.

4. Vernis laqué selon la revendication 2 dans lequel la charge est présente en une quantité ne dépassant pas 20% en poids.

5. Vernis laqué selon la revendication 2 dans lequel la charge est présente en une quantité ne dépassant pas 15% en poids.

6. Vernis laqué selon la revendication 2 dans lequel la charge est présente en une quantité ne dépassant pas 9% en poids.

7. Vernis laqué selon l'une quelconque des revendications précédentes dans lequel la charge comprend 10% de talc, 2% de phosphate de zinc et 2% de borate de magnésium en poids.

8. Vernis laqué selon l'une quelconque des revendications précédentes dans lequel la charge comprend 7% de talc, 2% de phosphate de zinc et 10% de borate de magnésium en poids.

9. Vernis laqué selon l'une quelconque des revendications précédentes dans lequel la charge comprend 5% de talc, 2% de phosphate de zinc et 2% de borate de magnésium en poids.

10. Vernis laqué selon l'une quelconque des revendications précédentes dans lequel la charge comprend 5% de talc, 2% de phosphate de zinc et 5% de borate de magnésium en poids.

11. Vernis laqué selon l'une quelconque des revendications précédentes dans lequel la charge comprend 5% de talc, 4% de phosphate de zinc et 5% de borate de magnésium en poids.
